(19) Europäisches Patentamt
European Patent Office
Office européen des brevets

(11) **EP 2 405 247 A1**

(12) **DEMANDE DE BREVET EUROPEEN**

(43) Date de publication:
**11.01.2012 Bulletin 2012/02**

(51) Int Cl.:
***G01K 17/08*** *(2006.01)*

(21) Numéro de dépôt: **11169920.3**

(22) Date de dépôt: **15.06.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **05.07.2010 FR 1055419**

(71) Demandeur: **Ergelis**
**91400 Orsay (FR)**

(72) Inventeurs:
• **Paul Dubois Taine, Benoît**
**91400 ORSAY (FR)**

• **Munier, Nathanaël**
**78720 CERNAY LA VILLE (FR)**
• **Genin, Marie**
**94230 CACHAN (FR)**
• **Bruet, Benjamin**
**75006 PARIS (FR)**

(74) Mandataire: **Gauer, Pierre et al**
**Feray Lenne Conseil**
**Le Centralis**
**63, avenue du Général Leclerc**
**92340 Bourg-la-Reine (FR)**

(54) **PROCEDE DE DETERMINATION DE LA CONSOMMATION EN ENERGIE THERMIQUE D'UNE CELLULE**

(57) L'invention a pour objet un procédé de détermination de la consommation en énergie thermique d'une cellule (i) appartenant à un ensemble de cellules (2) chauffées chacune à l'aide d'au moins un aérotherme (5) associé à un fluide caloporteur issu d'un dispositif (3) de chauffage de fluide, caractérisé en ce que le procédé comprend les étapes consistant à :
a) déterminer l'énergie thermique ($E_{boude\_i}$) transmise par le fluide caloporteur à ladite cellule (i),
b) déterminer l'énergie thermique ($E_{boucle}$) transmise par le fluide caloporteur à l'ensemble des cellules (2),
c) déterminer l'énergie thermique ($E_{aéros}$) prélevée au fluide caloporteur par l'ensemble des aérothermes (5) des cellules (2), par la relation :

$$E_{aéros} = E_{calo} - E_{boucle}$$

dans laquelle $E_{calo}$ désigne l'énergie thermique produite par le dispositif (3) de chauffage de fluide et $E_{boucle}$ désigne l'énergie thermique transmise par le fluide caloporteur à l'ensemble des cellules (2),
d) déterminer l'énergie thermique ($E_{aeros\_i}$) transmise à ladite cellule (i) par le ou les aérothermes (5) présent(s) dans ladite cellule (i), en fonction de l'énergie thermique ($E_{aéros}$) prélevée au fluide caloporteur par l'ensemble des aérothermes (5) des cellules (2), déterminée à l'étape c), et
e) déterminer la consommation en énergie thermique de ladite cellule (i), comme étant égale à la somme de l'énergie thermique ($E_{boude\_i}$) transmise par le fluide caloporteur dans ladite cellule (i), déterminée à l'étape a), et de l'énergie thermique ($E_{aéros\_i}$) transmise à ladite cellule (i) par le ou les aérothermes (5) présent(s) dans ladite cellule (i), déterminée à l'étape d).

Fig. 1

**Description**

La présente invention a pour objet un procédé de détermination de la consommation en énergie thermique d'une cellule appartenant à un ensemble de cellules chauffées chacune à l'aide d'au moins un aérotherme associé à un fluide caloporteur. L'invention trouve tout particulièrement son application dans la gestion thermique des entrepôts.

Dans un entrepôt dont les cellules sont occupées par différents locataires, il est important de disposer d'une mesure de la consommation en énergie thermique des cellules reflétant aussi près que possible la consommation énergétique réelle.

La consommation en énergie thermique de chaque cellule est généralement déterminée en fonction de la surface de la cellule. Or, selon les habitudes des occupants des cellules, cette répartition peut ne pas être représentative de la réalité.

Il est également connu de déterminer cette consommation en énergie thermique à l'aide de calorimètres placés dans les cellules. Toutefois, les calorimètres sont chers, leur coût d'installation est élevé et ils nécessitent un entretien régulier pour rester fiables.

La présente invention vise à remédier à ces inconvénients.

L'invention propose en particulier un procédé permettant de déterminer de façon fiable et économique la consommation en énergie thermique de chaque cellule.

L'invention a ainsi pour objet un procédé de détermination de la consommation en énergie thermique d'une cellule (i) appartenant à un ensemble de cellules chauffées chacune à l'aide d'au moins un aérotherme associé à un fluide caloporteur issu d'un dispositif de chauffage de fluide.

Le procédé selon l'invention comprend les étapes consistant à :

a) déterminer l'énergie thermique ($E_{boucle\_i}$) transmise par le fluide caloporteur à ladite cellule (i),

b) déterminer l'énergie thermique ($E_{boucle}$) transmise par le fluide caloporteur à l'ensemble des cellules,

c) déterminer l'énergie thermique ($E_{aéros}$) prélevée au fluide caloporteur par l'ensemble des aérothermes des cellules, par la relation :

$$E_{aéros} = E_{calo} - E_{boucle}$$

dans laquelle $E_{calo}$ désigne l'énergie thermique produite par le dispositif de chauffage de fluide et $E_{boucle}$ désigne l'énergie thermique transmise par le fluide caloporteur à l'ensemble des cellules,

d) déterminer l'énergie thermique ($E_{aeros\_i}$) transmise à ladite cellule (i) par le ou les aérothermes présent(s) dans ladite cellule (i), en fonction de l'énergie thermique ($E_{aéros}$) prélevée au fluide caloporteur par l'ensemble des aérothermes des cellules, déterminée à l'étape c), et

e) déterminer la consommation en énergie thermique de ladite cellule (i), comme étant égale à la somme de l'énergie thermique ($E_{boude\_i}$) transmise par le fluide caloporteur dans ladite cellule (i), déterminée à l'étape a), et de l'énergie thermique ($E_{aéros\_i}$) transmise à ladite cellule (i) par le ou les aérothermes présent(s) dans ladite cellule (i), déterminée à l'étape d).

Le fluide caloporteur pouvant être mis en circulation par une pompe, l'énergie thermique ($E_{boude\_i}$) transmise par le fluide caloporteur dans ladite cellule (i) peut être donnée par la relation :

$$E_{boucle\_i} = \int S_{tatut\ pompe} * K_{global} * L_i * ((T_{départ} + T_{retour})/2 - T_{ambiante\_i}).dt$$

dans laquelle:

-    Statut pompe vaut 0 si la pompe est à l'arrêt et vaut 1 si la pompe est en marche,
-    $K_{global}$ désigne un coefficient d'échange thermique calibrable,
-    le fluide caloporteur circulant dans un circuit de fluide, $L_i$ désigne le rapport de la longueur du circuit de fluide dans la cellule (i) sur la longueur totale du circuit de fluide,
-    $T_{départ}$ désigne la température du fluide caloporteur partant du dispositif de chauffage de fluide,
-    $T_{retour}$ désigne la température du fluide caloporteur revenant au dispositif de chauffage de fluide,
-    $T_{ambiante\_i}$ désigne la température dans la cellule (i).

L'énergie thermique ($E_{boucle}$) transmise par le fluide caloporteur dans l'ensemble des cellules est la somme des énergies thermiques ($E_{boucle\_i}$) transmises par le fluide caloporteur à chaque cellule (i). L'énergie thermique ($E_{boucle}$) peut ainsi être donnée par la relation :

$$E_{boucle} = \int S_{tatut\ pompe} * K_{global} * \Sigma_i\ L_i * ((T_{départ} + T_{retour})/2 - T_{ambiante\_i}).dt$$

Le coefficient d'échange thermique $K_{global}$ peut être donné par la relation :

$$K_{global} = \frac{E_{boucle}}{\int (S_{tatut\ pompe} * \Sigma_i\ L_i * (T_{moy\text{-}boucle} - T_{ambiante\_i})).dt}$$

dans laquelle:

- $E_{boucle}$ désigne l'énergie thermique transmise par le fluide caloporteur dans l'ensemble des cellules,
- $Statut_{pompe}$ vaut 0 si la pompe est à l'arrêt et vaut 1 si la pompe est en marche,
- le fluide caloporteur circulant dans un circuit de fluide, $L_i$ désigne le rapport de la longueur du circuit de fluide dans la cellule (i) sur la longueur totale du circuit de fluide,
- Tmoy-boucle est égal à ($T_{départ} + T_{retour}$)/2, $T_{départ}$ désignant la température du fluide caloporteur partant du dispositif de chauffage de fluide, et $T_{retour}$ désignant la température du fluide caloporteur revenant au dispositif de chauffage de fluide,
- $T_{ambiante\_i}$ désigne la température dans la cellule (i).

L'énergie thermique ($E_{aéros\_i}$) transmise à ladite cellule (i) par le ou les aérothermes présent(s) dans ladite cellule (i) peut être donnée par la relation :

$$E_{aéros\_i} = S_{tatut\ pompe} * \frac{C_{aéros\_i} * (T_{moy\text{-}boucle} - T_{ambiante\_i})}{\Sigma_i\ C_{aéros\_i} * (T_{moy\text{-}boucle} - T_{ambiante\_i})} * E_{aéros}$$

dans laquelle :

- $Statut_{pompe}$ vaut 0 si la pompe est à l'arrêt et vaut 1 si la pompe est en marche,
- $C_{aéros\_i}$ désigne la consommation électrique du ou des aérothermes de la cellule (i),
- $T_{moy\text{-}boucle}$ est égal à ($T_{départ} + Tretour$)/2, $T_{départ}$ désignant la température du fluide caloporteur partant du dispositif de chauffage de fluide, et $T_{retour}$ désignant la température du fluide caloporteur revenant au dispositif de chauffage de fluide,
- $T_{ambiante\_i}$ désigne la température dans la cellule i,
- $E_{aéros}$ désigne l'énergie thermique prélevée au fluide caloporteur par l'ensemble des aérothermes des cellules.

L'énergie thermique ($E_{aeros\_i}$) transmise à ladite cellule (i) par le ou les aérothermes présent(s) dans ladite cellule (i) peut être déterminée sans utiliser de compteur de l'énergie électrique consommée par le ou les aérothermes.

L'énergie thermique ($E_{aeros\_i}$) transmise à ladite cellule (i) par le ou les aérothermes présent(s) dans ladite cellule peut ainsi être donnée par la relation :

$$E_{aéros\_i} = \frac{S_{tatut\ pompe} * S_{tatut\ aéros\_i} * (T_{moy\text{-}boucle} - T_{ambiante\_i}) * E_{aéros}}{\Sigma_i\ S_{tatut\ aéros\_i} * (T_{moy\text{-}boucle} - T_{ambiante\_i})}$$

dans laquelle :

- $Statut\ p_{ompe}$ vaut 0 si la pompe est à l'arrêt et vaut 1 si la pompe est en marche,

- Statut $_{aeros\_i}$ vaut 0 si le ou les aérothermes présent(s) dans la cellule (i) sont à l'arrêt et vaut 1 si le ou les aérothermes présent(s) dans la cellule (i) sont en marche,
- Tmoy-boucle est égal à $(T_{départ}+T_{retour})/2$, $T_{départ}$ désignant la température du fluide caloporteur partant du dispositif de chauffage de fluide, et $T_{retour}$ désignant la température du fluide caloporteur revenant au dispositif de chauffage de fluide,
- $T_{ambiante-i}$ désigne la température dans la cellule i,
- $E_{aéros}$ désigne l'énergie thermique prélevée au fluide caloporteur par l'ensemble des aérothermes des cellules.

L'énergie thermique ($E_{calo}$) produite par le dispositif de chauffage de fluide peut être donnée par un calorimètre mesurant la chaleur produite par le dispositif de chauffage.

L'énergie thermique ($E_{calo}$) produite par le dispositif de chauffage de fluide peut également être déterminée sans utiliser de calorimètre mesurant la chaleur produite par le dispositif de chauffage.

Elle peut ainsi être donnée par la relation :

$$E_{calo} = \int 3600*d*c*\rho*(T_{départ}-T_{retour}).dt$$

dans laquelle :

- d désigne le débit du fluide caloporteur en m$^3$/h,
- c désigne la chaleur massique du fluide caloporteur en kJ/kg.K,
- p désigne la densité du fluide caloporteur en kg/m$^3$,
- $T_{départ}$ désigne la température du fluide caloporteur partant du dispositif de chauffage de fluide,
- $T_{retour}$ désigne la température du fluide caloporteur revenant au dispositif de chauffage de fluide.

Le procédé peut comprendre en outre une étape f) de détermination du ratio ($r_{conso\_i}$) de consommation en énergie thermique de ladite cellule (i) à l'aide de la relation :

$$r_{conso\_i} = (E_{aéro\_i} + E_{boucle\_i}) / \Sigma_i (E_{aéro\_i} + E_{boucle\_i})$$

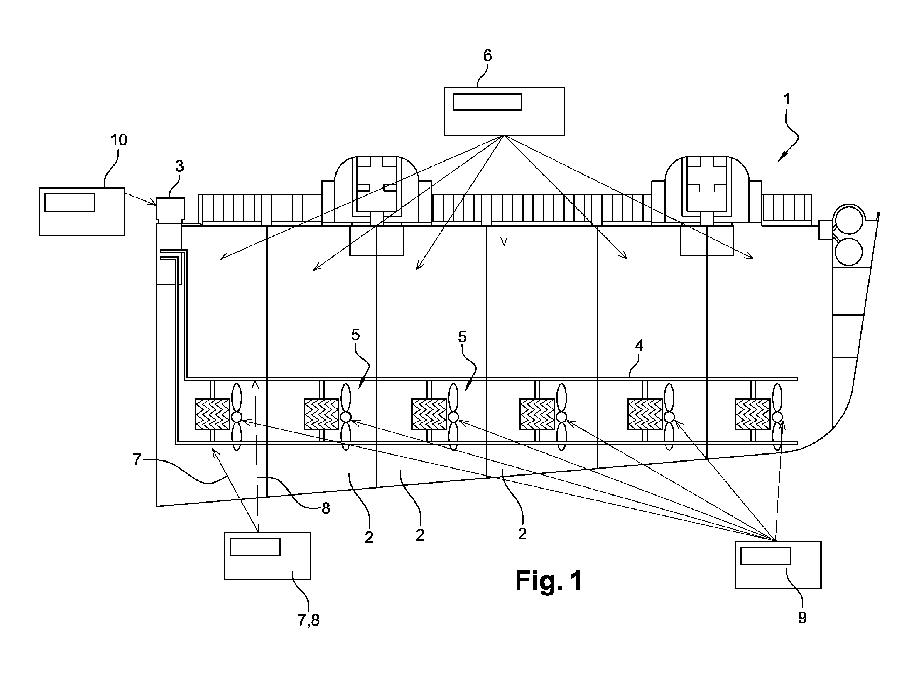

D'autres caractéristiques et avantages de la présente invention apparaîtront plus clairement à la lecture de la description suivante donnée à titre d'exemple illustratif et non limitatif et faite en référence à la figure 1 annexée qui illustre un dispositif soumis au procédé selon l'invention.

Tel qu'illustré à la figure 1, un entrepôt 1 comprend par exemple six cellules 2 occupées par différents locataires. Une chaudière 3 produit de la chaleur véhiculée par un fluide caloporteur, typiquement de l'eau, qui circule dans une boucle d'eau chaude 4 (ou circuit d'eau chaude 4) au moyen d'une pompe d'un circulateur, non représentée, par exemple une pompe de la chaudière 3.

La boucle 4 comprend une boucle aller partant de la chaudière 3 et une boucle retour retournant vers la chaudière 3. Dans chaque cellule 2, un ou plusieurs aérothermes 5 prélèvent de la chaleur à la fois à la boucle aller et à la boucle retour.

Un aérotherme est un générateur soufflant de l'air chaud à l'aide par exemple d'un ventilateur afin d'élever la température d'un local. Les aérothermes 5 prélèvent de la chaleur sur la boucle d'eau chaude 4 et la transmettent aux cellules 2.

Le dispositif comprend en outre un capteur de température 6 disposé dans chaque cellule 2, ainsi qu'un capteur de température 7 placé au départ de la boucle d'eau chaude 4 et un capteur de température 8 placé au retour de la boucle d'eau chaude 4.

Le dispositif peut également comprendre un compteur d'énergie électrique 9 relié aux aérothermes 5 dans chaque cellule 2, ainsi qu'un calorimètre 10 mesurant la chaleur produite par la chaudière 3. Le dispositif enregistre en permanence les paramètres mesurés.

L'hypothèse de départ est que l'énergie thermique produite par la chaudière 3 de l'entrepôt 1, notée $E_{calo}$, est communiquée à l'entrepôt 1 sous forme d'énergie dissipée par déperditions thermiques au niveau de la boucle d'eau chaude 4 parcourant les cellules 2 (non calorifugées en général), notée $E_{boucle}$, et sous forme d'énergie prélevée par les aérothermes 5 des cellules 2 sur la boucle d'eau chaude 4 de la chaudière 3, notée $E_{aéros}$.

Toute l'énergie produite par la chaudière 3 est transmise via la boucle d'eau chaude 4 aux cellules 2 de l'entrepôt 1 sous l'une ou l'autre des deux formes décrites ci-dessus. On en déduit la relation :

$$E_{calo} = E_{aéros} + E_{boucle}.$$

L'énergie thermique $E_{calo}$ est mesurée au niveau de la chaudière 3 par le calorimètre 10. Le procédé selon l'invention va permettre de calculer pour chaque cellule (i), $E_{boucle-i}$ et d'y ajouter $E_{aéros\_i}$.

Le calcul de l'énergie dissipée via la boucle d'eau chaude 4 repose sur trois hypothèses.

La première hypothèse et une hypothèse d'uniformité des caractéristiques physiques de la boucle d'eau chaude 4. Afin de calculer l'énergie $E_{boucle}$ dissipée par les déperditions de la boucle d'eau chaude 4, on fait l'hypothèse que la boucle 4 a les mêmes caractéristiques physiques sur toute sa longueur, du départ au retour vers la chaudière 3.

Les déperditions dans chaque cellule 2 sont caractérisées de façon uniforme par un coefficient $K_{global}$ mais dépendent uniquement de la différence entre la température de l'eau de la boucle 4 et la température ambiante de la cellule 2.

Tout au long de la boucle 4, la température de l'eau chaude diminue linéairement à mesure que la distance entre la portion de boucle 4 étudiée et la chaudière 3 augmente. La boucle 4 part de la chaudière 3, traverse chacune des cellules 2 puis effectue le chemin inverse. On peut donc considérer dans une deuxième hypothèse que la température de la boucle 4, dans toute sa longueur, est égale à la moyenne des températures de départ et de retour de la boucle 4 :

$$T_{moy\text{-}boucle} = (T_{depboucle} + T_{retboucle})/2$$

La troisième hypothèse est une hypothèse de répartition linéique de la boucle d'eau chaude 4 dans les cellules 2.

La longueur de boucle 4 traversant chaque cellule 2 est également un paramètre pouvant influer sur le calcul de $E_{boucle}$. La répartition linéique de boucle 4 dans les cellules 2 peut ne pas être homogène. Dans ce cas, on définit pour chaque cellule (i) un coefficient $L_i$ de répartition linéique de la boucle 4. Ce coefficient implique une variation de la dissipation de chaleur en fonction de la quantité de boucle 4 présente dans chacune des cellules.

Il est défini comme suit :

$$L_i = L_{canalisation\_i} / L_{canalisation\_total}.$$

Il vaut 1 si la canalisation est répartie dans l'entrepôt 1 de façon homogène. Il est différent de 1 dans le cas contraire.

Finalement, l'énergie dissipée via la boucle d'eau chaude 4 par la cellule (i) est :

$$E_{boucle\_i} = \int(S_{tatut\ pompe} * L_i * K_{global} * (T_{moy\text{-}boucle} - T_{amb\_i})).dt$$

Au niveau de l'entrepôt 1, l'énergie dissipée via la boucle d'eau chaude 4 se calcule donc comme la somme des déperditions via la boucle 4, de toutes les cellules 2 :

$$E_{boucle} = \int S_{tatut\ pompe} * K_{global} * \Sigma_i\ L_i * (T_{moy\text{-}boucle} - T_{amb\_i})).dt$$

Le coefficient $K_{global}$ est calculé durant une étape de calibrage, qui sera décrite plus loin, et le coefficient $L_i$ est lui évalué à partir des plans et des données techniques des équipements.

Ayant calculé l'énergie $E_{boucle}$, on déduit du calcul l'énergie prélevée par les aérothermes 5 des cellules 2 sur la boucle d'eau chaude 4.

Cette énergie s'exprime donc comme suit :

$$E_{aéros} = E_{calo} - E_{boucle}.$$

$E_{aéros}$ est transmise globalement aux cellules 2 de l'entrepôt 1. Elle se répartit en outre, selon les cellules 2, en fonction de l'activité des aérothermes 5 et de la différence entre la température de la boucle d'eau chaude 4 et la température ambiante de la cellule 2. Or, l'activité des aérothermes 5 d'une cellule 2 est décrite par leur consommation électrique $C_{aéros\_i}$

L'énergie diffusée dans chacune des cellules i via les aérothermes 5 est donc calculée comme suit :

$$E_{aéros\_i} = \frac{S_{tatut\ pompe} * C_{aéros\_i} * (T_{moy\text{-}boucle} - T_{ambiante\_i}) * E_{aéros}}{\Sigma_i\ C_{aéros\_i} * (T_{moy\text{-}boucle} - T_{ambiante\_i})}$$

Pour calculer le coefficient $K_{global}$, il faut auparavant isoler les dates auxquelles :

- aucun aérotherme 5 ne fonctionne ($C_{aéros\_i}$ =0 donc $E_{aéros}$ =0),
- la pompe de la chaudière 3 est en marche ($S_{tatut\ pompe}$=1).

A ces dates précises, on obtient les relations suivantes :

$$E_{calo} = E_{boucle}$$

D'où :

$$K_{global} = \frac{E_{fluide}}{\int (S_{tatut\ pompe} * \Sigma_i\ L_i * (T_{moy\text{-}boucle} - T_{ambiante\_i})).dt}$$

Obtenant un $K_{global}$ pour chacune des dates de mesure, on réalise la moyenne sur l'ensemble des calculs effectués.

Pour éviter les distorsions liées aux effets de bord, le calibrage peut être réalisé sur une période de temps supérieure à 24 heures et les valeurs relevées pendant le régime transitoire sont alors écartées du calcul.

Les données relevées nécessaires au calcul de répartition des consommations locatives sont :

- les températures ambiantes de chacune des cellules ($T_{amb\_i}$),
- la température de départ de la boucle d'eau chaude 4 et la température de retour de la boucle 4, desquelles on déduit la température moyenne de la boucle ($T_{depboucle}$, $T_{retboucle}$),
- la consommation électrique de l'ensemble des aérothermes 5 de chaque cellule ($C_{aéros-i}$).
- l'énergie thermique produite par la chaudière ($E_{calo}$ en kWh), de laquelle on déduit également l'état de marche de la pompe (Statut pompe).

Les données sont traitées mois par mois de façon à pouvoir calculer une répartition des consommations mensuelles.

A partir du $K_{global}$ déterminé par le calibrage, on calcule l'énergie dissipée via la boucle d'eau chaude 4 dans la cellule (i).

Pour chaque cellule et pour toute date de mesure, on calcule :

$$E_{boucle\_i} = \int S_{tatut\ pompe} * K_{global} * L_i * ((T_{départ} + T_{retour})/2 - T_{ambiante\_i}).dt$$

On réalise la somme sur le mois, et sur les cellules 2, des valeurs trouvées. On obtient $E_{boucle}$.

On accède alors à la quantité d'énergie dissipée via la boucle d'eau chaude 4 au sein de l'entrepôt 1 et sur le mois étudié.

Pour déterminer l'énergie diffusée via les aérothermes 5, la première étape est de calculer $E_{aéros}$ à partir de $E_{calo}$ et de $E_{boucle}$.

On effectue donc d'abord :

$$E_{aéros} = E_{calo} - E_{boucle}$$

Ensuite, pour chaque cellule, on calcule l'énergie thermique diffusée via les aérothermes 5 pour les dates où :

- la pompe de la chaudière 3 est en fonctionnement (Statut pompe =1)
- les aérothermes 5 de la cellule fonctionnent ($C_{aeros\_i} > 0$). Pour chaque date isolée, on applique la formule suivante :

$$E_{aéros\_i} = S_{tatut\ pompe} * S_{tatut\ aéros\_i} * \frac{(T_{moy\text{-}boucle} - T_{ambiante\_i}) * E_{aéros}}{\Sigma_i\ S_{tatut\ aéros\_i} * (T_{moy\text{-}boucle} - T_{ambiante\_i})}$$

On réalise la somme sur le mois de ces valeurs pour obtenir l'énergie thermique diffusée dans la cellule via les aérothermes 5 sur le mois.

La consommation d'énergie thermique totale de chaque cellule (i) s'exprime comme la somme de l'énergie dissipée via la boucle d'eau chaude $E_{boucle-i}$ et de l'énergie diffusée via les aérothermes $E_{aéro\_i}$.

On évalue finalement le ratio de consommation global pour chaque cellule (i) :

$$r_{conso\_i} = (E_{aéro\_i} + E_{boucle\_i}) / \Sigma_i\ (E_{aéro\_i} + E_{boucle\_i})$$

Pour chaque mois étudié, on calcule le rendement global des aérothermes 5 de chaque cellule 2. Il est défini par $E_{aéro-i}/Caéros\_i$. Ce paramètre permet d'évaluer l' « état de santé » du lot d'aérothermes 5 (encrassement des batteries par de la poussière) ou de la boucle 4 (baisse d'efficacité des circulateurs, présence de boues dans l'eau de la boucle 4).

Dans un deuxième mode de réalisation, l'entrepôt 1 ne dispose pas de comptage des consommations électriques des aérothermes 5 des cellules 2. La répartition des consommations suit la même démarche que celle décrite précédemment. L'unique différence tient du remplacement de la variable $C_{aéros-i}$ par la variable $S_{tatutaéros\_i}$.

La variable $S_{tatut\ aéros\_i}$ est issue du système de régulation. Elle est égale à la commande de fonctionnement envoyée par les régulateurs à chaque groupe d'aérothermes 5. Elle vaut 1 si la température de la cellule 2 est en dessous d'une température de consigne et donc si le fonctionnement de l'aérotherme 5 est nécessaire. Elle vaut 0 dans le cas contraire.

Au lieu de travailler en « proportion de consommation électrique » des aérothermes 5, on travaille dans ce cas, en « proportion d'activité ». La relation initiale devient :

$$E_{aéros\_i} = S_{tatut\ pompe} * S_{tatut\ aéros\_i} * \frac{(T_{moy\text{-}boucle} - T_{ambiante\_i}) * E_{aéros}}{\Sigma_i\ S_{tatut\ aéros\_i} * (T_{moy\text{-}boucle} - T_{ambiante\_i})}$$

On suppose alors que les aérothermes 5, en plus d'être tous identiques, sont en nombre connu dans chaque cellule 2.

Dans un troisième mode de réalisation, l'entrepôt 1 ne comporte pas de compteur 9 de la consommation électrique des aérothermes 5 ni de calorimètre 10 dans la chaudière 3. L'hypothèse de départ est que la puissance produite par la chaudière 3 de l'entrepôt 1 s'exprime comme :

$$E_{calo} = \int (3600 * d * c * \rho * (T_{depboucle} - T_{retboucle})).dt$$

avec les constantes suivantes:

- d le débit de la boucle d'eau chaude (m$^3$/h) (on fait l'hypothèse que le débit du circulateur est constant),
- c la chaleur massique de l'eau (kJ/kg.K),
- p la densité de l'eau (kg/m3).

L'énergie thermique $E_{calo}$ est donc calculée au moyen des températures de départ et de retour de la boucle d'eau chaude 4 et du débit constant de la pompe du circulateur. Le débit de la pompe est un paramètre lié au matériel, et est donc connu. Les autres paramètres sont des constantes connues.

Comme dans les deux cas précédents, cette énergie produite par la chaudière 3 est transmise à l'entrepôt 1 sous forme d'énergie dissipée au niveau de la boucle d'eau chaude 4 et d'énergie prélevée par les aérothermes 5.

On retrouve la relation :

$$E_{calo} = E_{aéros} + E_{boucle}$$

Le but de la méthode reste de calculer pour chaque cellule (i), $E_{boucle-i}$ et d'y ajouter $E_{aéros\_i}$.

L'énergie dissipée via la boucle d'eau chaude 4 dans l'entrepôt 1 se calcule comme décrit précédemment.

Du fait de l'absence de comptage de la consommation électrique des aérothermes 5, le calcul de l'énergie diffusée via les aérothermes 5 est le même que celui décrit dans le deuxième mode de réalisation.

On retrouve les relations suivantes :

$$E_{aéros} = E_{calo} - E_{boucle}$$

$$E_{aéros} = \Sigma_i \ E_{aéros\_i}$$

$$E_{aéros\_i} = \frac{S_{tatut\ pompe} * S_{tatut\ aéros\_i} *(T_{moy\text{-}boucle} - T_{ambiante\_i}) * E_{aéros}}{\Sigma_i \ S_{tatut\ aéros\_i} *(T_{moy\text{-}boucle} - T_{ambiante\_i})}$$

Le calibrage à réaliser est le même que celui décrit précédemment.

Les données nécessaires au calcul de répartition des consommations de chaque cellule sont cette fois-ci :

- les températures ambiantes de chacune des cellules ($T_{amb\_i}$),
- la température de départ de la boucle d'eau chaude 4 et la température de retour de la boucle 4, desquelles on déduit la température moyenne de la boucle ($T_{depboucle}$, $T_{retboucle}$),
- l'activité de l'ensemble des aérothermes 5 de chaque cellule ($Statut_{aéros\_i}$).

Les données sont traitées mois par mois de façon à pouvoir calculer une répartition des consommations mensuelle.

A partir des températures de départ et de retour de la boucle d'eau chaude 4 ainsi que de la donnée initiale du débit du circulateur, on calcule, pour tous les incréments de mesures, l'énergie produite par la chaudière 3 avec la formule décrite ci-dessus :

$$E_{calo} = \int(3600*d*c*\rho*(T_{depboucle} - T_{retboucle})).dt$$

L'énergie dissipée via la boucle d'eau chaude 4 est calculée comme décrit précédemment.

La première étape reste de calculer $E_{aéros}$ à partir de $E_{calo}$ et de $E_{boucle}$. On effectue donc :

$$E_{aéros} = E_{calo} - E_{boucle}$$

Ensuite, pour chaque cellule, on calcule l'énergie thermique diffusée via les aérothermes 5 pour les dates où :

- la pompe de la chaudière 3 est en fonctionnement (Statut pompe = 1)
- les aérothermes 5 de la cellule fonctionnent ($S_{tatutaéros\_i} = 1$)

à l'aide de la formule suivante :

$$E_{aéros\_i} = S_{tatut\ pompe} * S_{tatut\ aéros\_i} * \frac{(T_{moy\text{-}boucle} - T_{ambiante\_i}) * E_{aéros}}{\Sigma_i\ S_{tatut\ aéros\_i} * (T_{moy\text{-}boucle} - T_{ambiante\_i})}$$

On réalise la somme sur le mois des résultats exprimés en kWh pour obtenir l'énergie thermique diffusée dans la cellule via les aérothermes 5.

La consommation d'énergie thermique totale de chaque cellule (i) s'exprime comme la somme de l'énergie thermique diffusée via les aérothermes $E_{aéro\_i}$ et de l'énergie thermique dissipée via la boucle d'eau chaude $E_{boucle\_i}$.

On détermine ensuite le ratio de consommation global pour chaque cellule (i) :

$$r_{conso\_i} = (E_{aéro\_i} + E_{boucle\_i}) / \Sigma_i\ (E_{aéro\_i} + E_{boucle\_i})$$

Le procédé selon l'invention permet ainsi de déterminer de manière précise la répartition des consommations de chaque cellule. Ce procédé repose, non plus sur la surface de chacune des cellules, mais sur le comportement thermique des équipements au sein des cellules.

Le procédé permet d'obtenir une répartition fiable des consommations de chauffage, avec ou sans comptage des consommations électriques des aérothermes et avec ou sans calorimètre dans la chaudière.

## Revendications

1. Procédé de détermination de la consommation en énergie thermique d'une cellule (i) appartenant à un ensemble de cellules (2) chauffées chacune à l'aide d'au moins un aérotherme (5) associé à un fluide caloporteur issu d'un dispositif (3) de chauffage de fluide, **caractérisé en ce que** le procédé comprend les étapes consistant à :

   a) déterminer l'énergie thermique ($E_{boude\_i}$) transmise par le fluide caloporteur à ladite cellule (i),
   b) déterminer l'énergie thermique ($E_{boucle}$) transmise par le fluide caloporteur à l'ensemble des cellules (2),
   c) déterminer l'énergie thermique ($E_{aéros}$) prélevée au fluide caloporteur par l'ensemble des aérothermes (5) des cellules (2), par la relation :

$$E_{aéros} = E_{calo} - E_{boucle}$$

   dans laquelle $E_{calo}$ désigne l'énergie thermique produite par le dispositif (3) de chauffage de fluide et $E_{boucle}$ désigne l'énergie thermique transmise par le fluide caloporteur à l'ensemble des cellules (2),
   d) déterminer l'énergie thermique ($E_{aéros\_i}$) transmise à ladite cellule (i) par le ou les aérothermes (5) présent(s) dans ladite cellule (i), en fonction de l'énergie thermique ($E_{aéros}$) prélevée au fluide caloporteur par l'ensemble des aérothermes (5) des cellules (2), déterminée à l'étape c), et
   e) déterminer la consommation en énergie thermique de ladite cellule (i), comme étant égale à la somme de l'énergie thermique ($E_{boucle\_i}$) transmise par le fluide caloporteur dans ladite cellule (i), déterminée à l'étape a), et de l'énergie thermique ($E_{aeros\_i}$) transmise à ladite cellule (i) par le ou les aérothermes (5) présent(s) dans ladite cellule (i), déterminée à l'étape d).

2. Procédé selon la revendication 1, **caractérisé en ce que**, le fluide caloporteur étant mis en circulation par une pompe, l'énergie thermique ($E_{boucle\_i}$) transmise par le fluide caloporteur dans ladite cellule (i) est donnée par la relation :

$$E_{boucle\_i} = \int S_{tatut\ pompe} * K_{global} * L_i * ((T_{départ} + T_{retour})/2 - T_{ambiante\_i}).dt$$

dans laquelle:

- Statut pompe vaut 0 si la pompe est à l'arrêt et vaut 1 si la pompe est en marche,
- $K_{global}$ désigne un coefficient d'échange thermique calibrable,
- le fluide caloporteur circulant dans un circuit de fluide (4), $L_i$ désigne le rapport de la longueur du circuit de fluide (4) dans la cellule (i) sur la longueur totale du circuit de fluide (4),
- $T_{départ}$ désigne la température du fluide caloporteur partant du dispositif (3) de chauffage de fluide,
- $T_{retour}$ désigne la température du fluide caloporteur revenant au dispositif (3) de chauffage de fluide,
- $T_{ambiante-i}$ désigne la température dans la cellule (i).

3. Procédé selon la revendication 2, **caractérisé en ce que** l'énergie thermique ($E_{boucle}$) transmise par le fluide caloporteur dans l'ensemble des cellules (2) est donnée par la relation :

$$E_{boucle} = \int S_{tatut\ pompe} * K_{global} * \Sigma_i\ L_i * ((T_{départ} + T_{retour})/2 - T_{ambiante\_i}).dt$$

4. Procédé selon la revendication 2 ou 3, **caractérisé en ce que** le coefficient d'échange thermique $K_{global}$ est donné par la relation :

$$K_{global} = \frac{E_{boucle}}{\int (S_{tatut\ pompe} * \Sigma_i\ L_i * (T_{moy-boucle} - T_{ambiante\_i})).dt}$$

dans laquelle:

- $E_{boucle}$ désigne l'énergie thermique transmise par le fluide caloporteur dans l'ensemble des cellules (2),
- Statut pompe vaut 0 si la pompe est à l'arrêt et vaut 1 si la pompe est en marche,
- le fluide caloporteur circulant dans un circuit de fluide (4), $L_i$ désigne le rapport de la longueur du circuit de fluide (4) dans la cellule (i) sur la longueur totale du circuit de fluide (4),
- $T_{moy-boucle}$ est égal à $(T_{départ} + T_{retour})/2$, $T_{départ}$ désignant la température du fluide caloporteur partant du dispositif (3) de chauffage de fluide, et $T_{retour}$ désignant la température du fluide caloporteur revenant au dispositif (3) de chauffage de fluide,
- $T_{ambiante\_i}$ désigne la température dans la cellule (i).

5. Procédé selon l'une des revendications 1 à 4, **caractérisé en ce que** l'énergie thermique ($E_{aeros\_i}$) transmise à ladite cellule (i) par le ou les aérothermes (5) présent(s) dans ladite cellule (i) est donnée par la relation :

$$E_{aéros\_i} = S_{tatut\ pompe} * \frac{C_{aéros\_i} * (T_{moy-boucle} - T_{ambiante\_i}) * E_{aéros}}{\Sigma_i\ C_{aéros\_i} * (T_{moy-boucle} - T_{ambiante\_i})}$$

dans laquelle :

- Statut pompe vaut 0 si la pompe est à l'arrêt et vaut 1 si la pompe est en marche,
- $C_{aéros\_i}$ désigne la consommation électrique du ou des aérothermes (5) de la cellule (i),
- Tmoy-boucle est égal à $(T_{départ} + T_{retour})/2$, $T_{départ}$ désignant la température du fluide caloporteur partant du dispositif (3) de chauffage de fluide, et $T_{retour}$ désignant la température du fluide caloporteur revenant au dispositif (3) de chauffage de fluide,

- $T_{ambiante\_i}$ désigne la température dans la cellule (i),
- $E_{aéros}$ désigne l'énergie thermique prélevée au fluide caloporteur par l'ensemble des aérothermes (5) des cellules (2).

6. Procédé selon l'une des revendications 1 à 5, **caractérisé en ce que** l'énergie thermique ($E_{aeros\_i}$) transmise à ladite cellule (i) par le ou les aérothermes (5) présent(s) dans ladite cellule (i) est déterminée sans utiliser de compteur (9) de l'énergie électrique consommée par le ou les aérothermes (5).

7. Procédé selon l'une des revendications 1 à 4 ou 6, **caractérisé en ce que** l'énergie thermique ($E_{aeros\_i}$) transmise à ladite cellule (i) par le ou les aérothermes (5) présent(s) dans ladite cellule (i) est donnée par la relation :

$$E_{aéros\_i} = \frac{S_{tatut\ pompe} * S_{tatut\ aéros\_i} *(T_{moy\text{-}boucle} - T_{ambiante\_i}) * E_{aéros}}{\Sigma_i\ S_{tatut\ aéros\_i} *(T_{moy\text{-}boucle} - T_{ambiante\_i})}$$

dans laquelle :

- Statut pompe vaut 0 si la pompe est à l'arrêt et vaut 1 si la pompe est en marche,
- Statut $_{aéros\_i}$ vaut 0 si le ou les aérothermes (5) présent(s) dans la cellule (i) sont à l'arrêt et vaut 1 si le ou les aérothermes (5) présent(s) dans la cellule (i) sont en marche,
- $T_{moy\text{-}boucle}$ est égal à ($T_{départ}$+$T_{retour}$)/2, $T_{départ}$ désignant la température du fluide caloporteur partant du dispositif (3) de chauffage de fluide, et $T_{retour}$ désignant la température du fluide caloporteur revenant au dispositif (3) de chauffage de fluide,
- $T_{ambiante\_i}$ désigne la température dans la cellule (i),
- $E_{aéros}$ désigne l'énergie thermique prélevée au fluide caloporteur par l'ensemble des aérothermes (5) des cellules (2).

8. Procédé selon l'une des revendications 1 à 7, **caractérisé en ce que** l'énergie thermique ($E_{calo}$) produite par le dispositif (3) de chauffage de fluide est déterminée sans utiliser de calorimètre (10) mesurant la chaleur produite par le dispositif (3) de chauffage.

9. Procédé selon l'une des revendications 1 à 8, **caractérisé en ce que** l'énergie thermique ($E_{calo}$) produite par le dispositif (3) de chauffage de fluide est donnée par la relation :

$$E_{calo} = \int 3600*d*c*\rho*(T_{départ}\text{-}T_{retour}).dt$$

dans laquelle :

- d désigne le débit du fluide caloporteur en $m^3/h$,
- c désigne la chaleur massique du fluide caloporteur en kJ/kg.K,
- p désigne la densité du fluide caloporteur en $kg/m^3$
- $T_{départ}$ désigne la température du fluide caloporteur partant du dispositif (3) de chauffage de fluide,
- $T_{retour}$ désigne la température du fluide caloporteur revenant au dispositif (3) de chauffage de fluide.

10. Procédé selon l'une des revendications 1 à 9, **caractérisé en ce qu'**il comprend en outre une étape f) de détermination du ratio ($r_{conso\_i}$) de consommation en énergie thermique de ladite cellule (i) à l'aide de la relation :

$$r_{conso\_i} = (E_{aéro\_i} + E_{boucle\_i}) / \Sigma_i (E_{aéro\_i} + E_{boucle\_i})$$

$$r_{conso\_i} = (E_{aéro\_i} + E_{boucle\_i}) / \Sigma_i (E_{aéro\_i} + E_{boucle\_i})$$

Fig. 1

Europäisches
Patentamt

European
Patent Office

Office européen
des brevets

**RAPPORT DE RECHERCHE EUROPEENNE**

Numéro de la demande

EP 11 16 9920

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 988 713 A (CHEVALIER ET BAILLON) 30 août 1951 (1951-08-30) * le document en entier * ----- | 1-10 | INV. G01K17/08 |
| A | DE 33 10 238 A1 (ELSTER AG) 27 septembre 1984 (1984-09-27) * abrégé; figure 1 * * page 7, alinéa 2 * ----- | 1-10 | |

DOMAINES TECHNIQUES
RECHERCHES (IPC)

G01K
F24D

Le présent rapport a été établi pour toutes les revendications

| Lieu de la recherche | Date d'achèvement de la recherche | Examinateur |
|---|---|---|
| La Haye | 27 octobre 2011 | Barthélemy, Matthieu |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

.................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 11 16 9920

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-10-2011

| Document brevet cité au rapport de recherche | | Date de publication | Membre(s) de la famille de brevet(s) | Date de publication |
|---|---|---|---|---|
| FR 988713 | A | 30-08-1951 | AUCUN | |
| DE 3310238 | A1 | 27-09-1984 | AUCUN | |

EPO FORM P0460

Pour tout renseignement concernant cette annexe : voir Journal Officiel de l'Office européen des brevets, No.12/82